# EUROPEAN PATENT SPECIFICATION

(11) **EP 0 499 008 B1**
(45) Date of publication and mention of the grant of the patent: **27.12.1995**
(21) Application number: 91500102.8
(22) Date of filing: 30.08.1991
(51) Int. Cl.: H04M 3/24, H04M 17/02

(54) **Validation and identification unit maintenance terminal**
Wartungsendgerät zur Bewertung und Identifisierung
Terminal d'entretien pour validation et identification d'unité

(30) Priority: 11.02.1991 ES 9100354
(43) Date of publication of application: 19.08.1992
(73) Proprietor: TELEFONICA DE ESPANA, S.A., 28013 Madrid (ES)
(72) Inventor: Hermosilla Ortega, Angel, E-28013 Madrid (ES); Prieto Renieblas, Juan José, E-28043 Madrid (ES)
(74) Representative: Carpintero Lopez, Francisco

(56) References cited:
- GB-A- 2 046 557
- IEEE INTERNATIONAL CONFERENCE ON COMMUNICATIONS - ICC '90 vol. 2/24, 15 April 1990, ATLANTA, GA USA pages 602 - 606 , XP146133 BOWYER ET AL. 'Intelligent Network Services for Data Customers'

## Description

The present invention relates to a validation and identification unit maintenance terminal clearly designed as a tool able to fulfil two functions, one being the local initialization of the validation and identification unit (VIU) or of the modular public telephones adaptation unit (MTAU), without the modular telephones operating system (MTOS) calling the same, and allowing extensive diagnosis and the identification of breakdowns, likewise locally, provided that the central processing unit (CPU) is operating, the foregoing to be attained by means of a man-machine interactive language.

### FIELD OF THE INVENTION

This invention is applicable in the field of telecommunications, specifically to back the new modular public telephone service that allows calls to be made using various means of payment.

### BACKGROUND TO THE INVENTION

This validation and identification unit maintenance terminal is applicable within the modular public telephone management system, its features being defined according to the possibilities of using the same to maintain units in such system, which are responsible for making and collecting calls using credit cards and other forms of payment.

Since this service has been newly created, there is no known direct background on the subject.

The validation and identification unit maintenance terminal subject hereof is designed as another peripheral of the central processing unit microprocessor located at the validation and identification unit or at the modular public telephones adaptation unit.

More specifically, the validation and identification unit terminal subject hereof comprises two basic elements:
A.- A printed circuit card, the rear part of which carries a connector through which it is connected to the rear panel of the validation and identification unit or to the modular public telephones adaptation unit, in the second feeder module frame.
B.- A usage box connected to the printed circuit, its front part being fitted with a 4x20 character display, a keyboard, four functional push-buttons, marked SW1, SW2, SW3 and SW4.

The usage box also contains a potentiometer to adjust the display's contrast and a led diode that indicates operation of the terminal.

The usage box is made up of two large functional blocks, comprising an integrated circuit and the said 4 line, 20 character per line display.

It communicates with the central processing unit by means of a parallel bus.

The terminal has buffers which prevent the signals of the rest of the system from being biased.

The integrated circuit turns on the keys and prepares a binary code without rebounds, suitable for being polled by the central processing unit.

The cycle leading to the integrated circuit is established so as to extensively cover the delays that come about in the interconnection unit and the intrinsic requirements of the integrated circuit.

For keying in data, the terminal has a keyboard matrix with keys numbered 0 to 9 to input numbers, the keys marked * and # being provided for reserve purposes.

There are four other functional keys SW1, SW2, SW3 and SW4, the value of which can be reconfigured according to the indicators in the fourth line of the display.

The first three lines provide the operator with an indication of the system evolution.

### DESCRIPTION OF THE DRAWINGS

In order to provide a fuller description and contribute to the complete understanding of the characteristics of this invention, a single sheet of drawings is attached to the specification which, while purely illustrative and not fully comprehensive, shows the terminal subject hereof connected to the validation and identification unit or to the modular public telephones adaptation unit.

### PREFERRED EMBODIMENT OF THE INVENTION

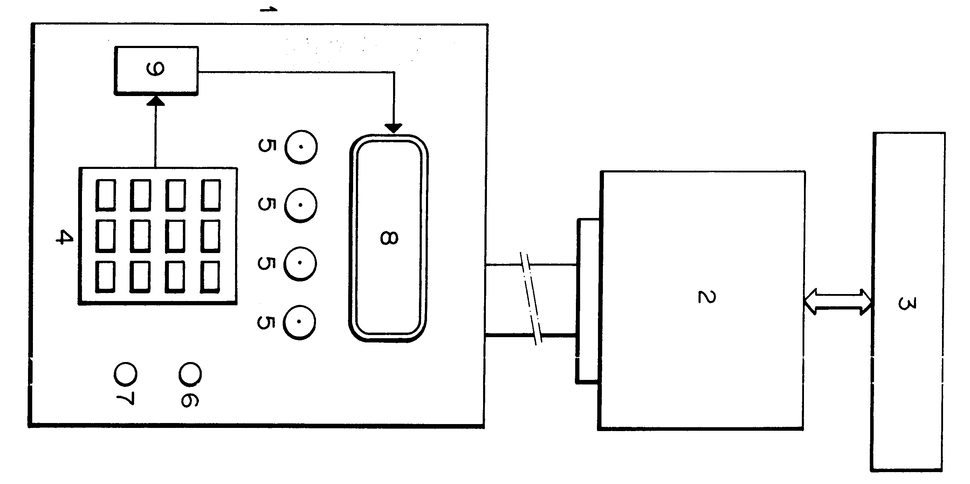

In light of the single figure, it can be observed that same shows a validation and identification unit maintenance terminal subject hereof, which is numbered (1), the same figure showing the connection card (2), being connected to the validation and identification unit and interconnection unit (3), the terminal being ready to operate.

The validation and identification unit maintenance terminal is shown with the keyboard matrix (4), the numerical and the reserve keys, with the functional push-buttons (5), the contrast adjustment potentiometer (6) and the operation indicator led diode (7).

It can also be seen that the terminal has a display (8) and an integrated circuit (9).

In order to connect the terminal to the rear panel in the validation and identification unit, feeding must needs be totally switched off in order to be able to subsequently instal the terminal and switch feeding on.

Once the validation and identification unit maintenance terminal is connected as aforesaid, this latter allows the following programming and control functions to be carried out on site:
- Initialization and repair functions.
- Display and clearing of alarms.
- Display of the operating parameters.
- Testing of the validation and identification unit or modular public telephones adaptation unit elements.

In order to carry out these functions, a man-machine interactive programme is provided, a functions menu appearing on the terminal display, selectable by means of the digits keyboard and functional keys to obtain different messages and parameters on the display.

In order to gain access to the programme, the terminal is connected to the validation and identification unit, at the interconnection unit, specifically at one of the two feeder unit connectors.

Subsequently, the validation and identification unit detects the presence of the terminal and various messages appear on the display.

In order to leave the programme, the terminal is removed.

Upon connection, different functions can be carried out that the display represents as a functions menu mode, with a code (SW1, SW2, SW3 or SW4) before each of them.

Access thereto is attained on pressing the relevant functional key.

The top two display lines are reserved for functional response or introducing parameters.

The digits suitable for inserting parameters are from 0 to 9.

The bottom two lines of the display are reserved for auxiliary functions within each function, these being controlled by the functional push-buttons.

On connecting the validation and identification unit, once the terminal subject hereof is installed, the latter checks its own operation, after which a configuration screen appears on display, setting forth the number of line modules present, and the operating software version thereof.

This is also indicated for the central processing unit and for the communications unit.

Activation of the X.25 or of the modular public telephones adaptation unit, and activation of the V.22bis modem is also indicated.

From this screen, the following functions may be chosen from by pressing the relevant functional key:
1.- Initialization.
2.- Dumping.
3.- Repair.
4.- Alarms.
5.- Parameters.
6.- Tests.

In order to gain access to any function, it will suffice to press the relevant digit, in order to subsequently execute the tasks pertaining to the function chosen using both keyboards.

By pressing number (1) key, access is gained to the initialization function that allows the validation and identification unit or the modular public telephones adaptation unit to be set up for the first time.

This takes place by sending the initialization message to the modular public telephones operating system (MTOS), in order for the latter to dump the operating parameters.

This implies that from that moment the modular public telephones operating system stores and can recognize all communications with the validation and identification unit.

This menu also shows all the operating parameters of the validation and identification unit, and the modular public telephones operating system call function can also be gained access to, where the validation and identification unit or the modular public telephones adaptation unit dials the modular public telephones operating system automatically, exchanging different messages with the same.

By pressing number (2) key, access is gained to the dumping menu, which allows dumping of the validation and identification unit.

To such end, it sends the drop message and all outstanding information to be sent by the validation and identification system or modular public telephones adaptation unit, to the modular public telephones operating system at that point, the contents of which message are similar to the daily routine, but advising the modular public telephones operating system that the validation and identification unit will be dropped, moreover sending invoicing information, if outstanding.

By pressing number (3) key, access is gained to the repair menu, which allows the functions to send the franking codes and the dumping of parameters to the modular public telephones operating system to be executed.

The menu accessible by pressing number (4) key corresponds to alarms, and allows the alarms generated by the equipment operating normally to be displayed, contemporaneously indicating the status thereof in real time.

This mode also indicates the messages sent by the central processing unit to the modular public telephones operating system, the existing collection messages, the existing daily routine messages, the parameters messages that are to be sent and the actual alarm messages.

Number (5) key provides access to the parameters menu, allowing consultation of the parameters inserted upon initialization.

By pressing number (6) key, access is gained to the tests menu, which menu allows the equipment elements to be tested automatically, indicating faults that might seriously impair equipment operation.

It is possible in this menu to establish correct operation of all line units and each of them separately, as well as the communications unit and all the X.25 communications chain contained in the central processing unit modules and the communications unit.

In all these menus, the four functional push-buttons are defined with different characteristics, executing different access, entry, exit, modifications and error amendment functions.

## Claims

1. Validation and identification unit maintenance terminal for local initialization of a validation and identification unit or a modular public telephone adaptation unit, said terminal comprising a printed circuit card (2), a display (8), a keyboard matrix (4), four functional push-buttons (5) and an integrated circuit (9), characterised by means for maintaining said validation and identification unit or said modular public telephones adaptation unit by means of accessing the internal parameters, the alarms and the functional statistics thereof.

2. Validation and identification unit maintenance terminal, as in claim one, characterised by means for communicating with the modular public telephones operating system, for the purposes of connecting, dropping, initializing and exchanging messages with the validation and identification unit or with the modular public telephones adaptation unit.

3. Validation and identification unit maintenance terminal, as in previous claims, characterised by means for executing local tests for all modules individually and as a whole, such modules making up the validation and identification unit or the modular public telephones adaptation unit.

## Patentansprüche

1. Wartungsterminal einer Validierungs- und Identifikationseinheit für die lokale Initialisierung einer Validierungs- und Identifikationseinheit oder einer Einheit für die Anpassung öffentlicher modularer Fernsprecher, welches eine gedruckte Schaltplatte (2), einen Bildschirm (8), eine Tastaturmatrix (4), vier Funktionstasten (5) und einen integrierten Schaltkreis (9) umfasst, gekennzeichnet durch Mittel für die Wartung dieser Validierungs- und Identifikationseinheit oder Einheit für die Anpassung öffentlicher modularer Fernsprecher über den Zugriff auf interne Parameter, Alarmmeldungen und Funktionsstatistiken derselben.

2. Wartungsterminal einer Validierungs- und Identifikationseinheit, nach Anspruch eins gekennzeichnet durch Mittel für die Kommunikation mit dem Betriebssystem der öffentlichen modularen Fernsprecher, um Meldungen anzuschliessen, abzuschalten, initialisieren und mit der Validierungs- und Identifikationseinheit oder Einheit für die Anpassung öffentlicher modularer fernsprecher auszutauschen.

3. Wartungsterminal einer Validierungs- und Identifikationseinheit, nach den vorangehenden Ansprüchen gekennzeichnet durch Mittel für die Durchführung lokaler Prüfungen für alle Module, sei es insgesamt oder einzeln, wobei diese Module die Validierungs- und Identifikationseinheit oder die Einheit für die Anpassung öffentlicher modularer Fernsprecher bilden.

## Revendications

1. Terminal de maintenance d'unité de validation et d'identification, pour l'initialisation locale d'une unité de validation et d'identification ou d'une unité d'adaptation de téléphone public modulaire, ce terminal comprenant une plaque de circuit imprimé (2), un écran (8), une matrice de clavier (4), quatre touches de fonction (5) et un circuit intégré (9), caractérisé par des moyens pour maintenir cette unité de validation et d'identification ou cette unité d'adaptation des téléphones publics modulaires à l'aide d'accès ou de paramètres internes, aux alarmes et aux statistiques fonctionnelles de ces dernières.

2. Terminal de maintenance d'une unité de validation et d'identification, selon la revendication un, caractérisé par des moyens pour communiquer avec le système opérationnel de téléphones publics modulaires, afin de connecter, de déconnecter, d'initialiser et d'échanger des messages avec l'unité de validation et d'identification ou avec l'unité d'adaptation de téléphones publics modulaires.

3. Terminal de maintenance d'une unité de validation et d'identification, selon les revendications antérieures, caractérisé par des moyens pour exécuter des essais locaux pour tous les modules, conjointement ou individuellement, ces modules constituant l'unité de validation et d'identification ou l'unité d'adaptation des téléphones publics modulaires.
